# FASCICULE DE BREVET EUROPEEN

(11) **EP 1 660 843 B1**
(45) Date de publication et mention de la délivrance du brevet: **12.03.2014**
(21) Numéro de dépôt: 04769350.2
(22) Date de dépôt: 27.08.2004
(51) Int. Cl.: G01D 13/28, G01D 11/28

(54) **ACTIONNEUR UNIVERSEL NOTAMMENT POUR APPLICATION AUX TABLEAUX DE BORD**
UNIVERSELLES STELLGLIED INSBESONDERE FÜR ARMATURENBRETTER
UNIVERSAL ACTUATOR PARTICULARLY FOR DASHBOARDS

(30) Priorité: 29.08.2003 FR 0350479
(43) Date de publication de la demande: 31.05.2006
(73) Titulaire: Sonceboz S.A., 2605 Sonceboz (CH)
(72) Inventeur: SIGG, Daniel, 2605 Sonceboz (CH); ZUPPIGER-LACHAT, Corinne, 2503 Bienne (CH)
(74) Mandataire: Breesé, Pierre
(86) Numéro de dépôt international: PCT/IB2004/002958
(87) Numéro de publication internationale: WO 2005/022088

(56) Documents cités:
- EP-A- 0 536 485
- EP-A- 0 679 871
- EP-A1- 1 519 159
- DE-A- 3 626 957
- US-A- 5 603 283
- US-B1- 6 557 485
- PATENT ABSTRACTS OF JAPAN vol. 1996, no. 09, 30 septembre 1996 (1996-09-30) -& JP 08 136292 A (NIPPONDENSO CO LTD), 31 mai 1996 (1996-05-31)

## Description

La présente invention concerne le domaine de l'instrumentation analogique destinée à des tableaux de bord et plus particulièrement les actionneurs électriques destinés à positionner les indicateurs de tableaux de bord. Ces actionneurs sont soudés sur des circuits imprimés qui comportent sur leur face supérieure l'ensemble des composants électroniques, et notamment les diodes électroluminescentes servant à l'éclairage des indicateurs.

Un actionneur conforme au préambule de la revendication 1 est décrit dans la demande de brevet européen EP 0 679 871. Des actionneurs voisins ou semblables sont décrits dans les brevets et demandes de brevets US 6 557 485, JP 08 136292, US 5 603 283, EP 0 536 485, et DE 3 626 957.

En fonction de l'application, les actionneurs peuvent être montés sur la face supérieure ou inférieure du circuit imprimé. Ces deux variantes de montage impliquent deux variantes d'actionneurs :
- Dans la première version, l'actionneur est monté sur la face supérieure, côté composants, du circuit imprimé. L'indicateur est fixé sur le coté supérieur du moteur, on parle de montage avant.
- Dans la deuxième version, l'actionneur est monté sur la face inférieure, coté libre, du circuit imprimé. L'indicateur est fixé à travers le circuit imprimé sur le coté inférieur du moteur, on parle de montage arrière.

Dans ce contexte, l'invention a notamment pour but de réaliser un actionneur utilisable de façon universelle, l'actionneur de l'invention étant à cette fin défini par les caractéristiques énoncées dans les revendications.

L'invention concerne également un module de tableau de bord comportant un tel actionneur.

L'invention sera mieux comprise à la lecture de la description suivante faisant référence aux dessins annexés où :
- la figure 1 représente une vue trois-quart, face arrière, d'un moteur de l'art antérieur, montage avant,
- la figure 2 représente une vue trois-quart, face arrière, d'un moteur de l'art antérieur, montage arrière,
- la figure 3 représente un indicateur de tableaux de bord de la présente invention,
- la figure 4 représente une vue trois-quart, face avant, du boîtier motorisé de l'invention,
- la figure 5 représente une vue trois-quart, face arrière, du boîtier motorisé de l'invention,
- la figure 6 présente le montage avant du moteur,
- la figure 7 présente le montage arrière du moteur,
- la figure 8 présente une vue éclatée du moteur destiné à intégrer le boîtier décrit par l'invention.

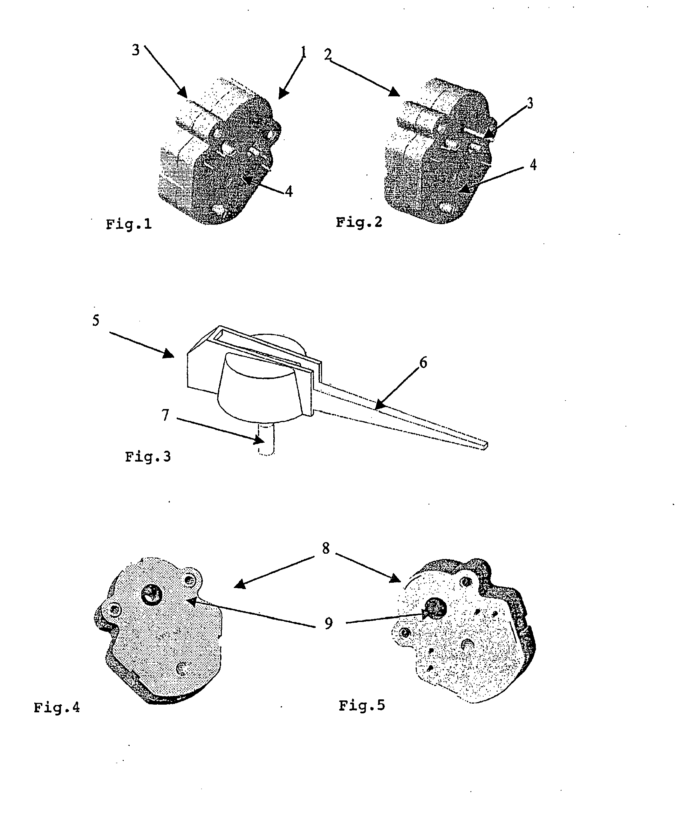

Les figures 1 et 2 présentent des boîtiers motorisés (1) et (2) de l'art antérieur dans deux versions différentes.

En figure 1, la première version présente un arbre de sortie (3) sur le devant du moteur (1) à l'opposé de la surface de montage (4) sur un circuit imprimé recevant l'ensemble des composants électroniques nécessaires au fonctionnement du moteur. On parle de configuration en montage avant.

En figure 2, la deuxième version de moteur (2) présente un arbre de sortie (3) du côté de la surface de montage (4) à l'opposé de la surface supérieure du moteur (2). On parle de configuration en montage arrière.

Ces deux versions obligent à réaliser deux types de moteur distincts.

La figure 3 présente un indicateur (5) lumineux de tableaux de bord intégrant le boîtier motorisé de l'invention. L'indicateur lumineux (5) est composé d'un pointeur (6) et d'un arbre (7) sous la forme d'une connexion de type mâle, creuse ou pleine, destinée à se relier avec la connexion de type femelle du boîtier motorisé de l'invention. L'arbre de rotation (7) est conçu apte à recevoir une lumière à travers celui-ci ou par le dessous de l'indicateur et sera ainsi préférentiellement translucide ou creux.

Les figures 4 et 5 présentent le boîtier motorisé (8) de l'invention par une vue de, respectivement, dessus et dessous. Il y a présence d'un orifice (9) traversant dans lequel se trouve un moyen de connexion de type femelle apte à recevoir un organe de connexion de type mâle, d'un côté ou de l'autre du moteur. Le mouvement de rotation produit par le moteur (8) est donc transmis à l'organe à commander via une connexion de type mâle-femelle dans l'orifice (9).

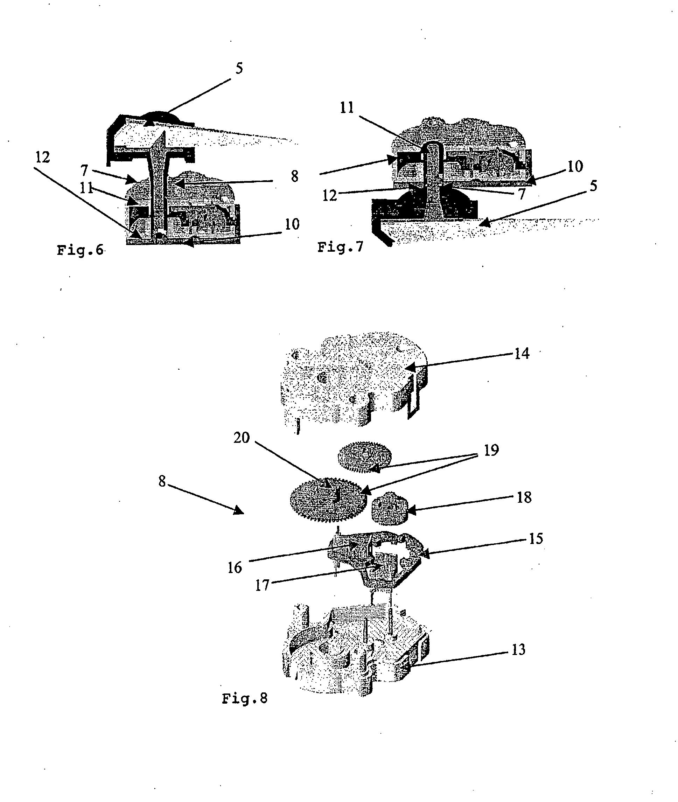

La figure 6 présente une vue en coupe de l'invention dans un premier mode de réalisation.

Le boîtier motorisé (8) est placé sur la face supérieure d'un circuit imprimé (10) sur lequel sont placés tous les composants électroniques (non visibles). Un indicateur lumineux de tableaux de bord (5) est représenté avec son moyen de connexion mâle (7) qui vient intégrer, sur la partie supérieure du boîtier motorisé (8), le moyen de connexion femelle (11) dudit boîtier (8). Un moyen d'éclairage (12) est placé sur la face supérieure du circuit imprimé (10), par exemple une diode électroluminescente. Elle est dans l'axe de rotation du système et permet d'éclairer directement, à travers le moteur (8), l'arbre (7) de l'indicateur lumineux (5). On parle, pour cette configuration, de montage avant.

La figure 7 présente une vue en coupe de l'invention dans un deuxième mode de réalisation. Le même boîtier motorisé (8) est placé sur la face inférieure du circuit imprimé (10), du côté libre. Un indicateur lumineux de tableaux de bord (5) est représenté avec son moyen de connexion mâle (7) qui vient intégrer, sur la partie inférieure du boîtier motorisé (8) et à travers le circuit imprimé (10), le moyen de connexion femelle (11) dudit boîtier (8). Un moyen d'éclairage (12) est placé sur la face inférieure du circuit imprimé (10), par exemple une ou plusieurs diodes électroluminescentes. Déporté de l'axe de rotation du système, il éclaire directement le dessous de l'indicateur lumineux (5). On parle pour cette réalisation, de montage arrière.

La figure 8 décrit le détail du boîtier motorisé (8) de l'invention. Il est composé d'une base (13) et d'un couvercle (14). A l'intérieur sont placés un ensemble magnétique statorique (15) comprenant au moins deux bobines électriques (16,17), un rotor (18) aimanté, un ensemble de réduction (19) et un moyen de connexion de type femelle (20). Ce moyen de connexion (20), au sein du boîtier moteur, est accessible à un moyen de connexion de type mâle à partir de la face supérieure ou inférieure du boîtier à travers la base (13) ou le couvercle (14). Le moteur de type diphasé intégré dans le boîtier motorisé (8) décrit figure 8 est un exemple possible de motorisation, mais n'est nullement limitatif.

## Revendications

1. Actionneur électrique de tableau de bord constitué par un boîtier motorisé (8) présentant deux faces opposées et un axe de sortie creux (11), ledit boîtier motorisé (8) comprenant un moteur électrique entraînant un indicateur (5) présentant un organe d'accouplement mâle (7) dont la section est complémentaire à la section intérieure dudit axe de sortie creux (11) du moteur, **caractérisé en ce que** ledit axe de sortie creux (11) débouche sur lesdites deux faces opposées du moteur sans former de protubérance par rapport aux dites faces opposées de sorte à permettre la connexion de l'organe d'accouplement (7) de l'indicateur (5) sur l'une ou sur l'autre desdites faces opposées dudit boitier motorisé (8).

2. Actionneur électrique de tableau de bord selon la revendication 1, **caractérisé en ce que** ledit boîtier motorisé (8) présente sur ses deux faces opposées une lumière (9) coaxiale avec l'axe de sortie (11) du moteur, et des lumières pour le passage desdits moyens de connexion électriques et mécaniques.

3. Actionneur électrique de tableau de bord selon la revendication 1 ou 2, **caractérisé en ce que** les deux faces opposées dudit boîtier motorisé (8) sont sensiblement planes.

4. Actionneur électrique de tableau de bord selon la revendication 1, **caractérisé en ce que** la partie mâle de l'indicateur est apte à conduire la lumière à un pointeur équipant ledit indicateur (5).

5. Actionneur électrique de tableau de bord selon la revendication 1, **caractérisé en ce que** l'axe de sortie creux est réalisé en un matériau transparent.

6. Actionneur électrique de tableau de bord selon la revendication 1, **caractérisé en ce que** l'organe mâle (7) de l'indicateur (5) est réalisé en un matériau transparent.

7. Module de tableau de bord comportant un circuit imprimé et au moins un actionneur selon l'une quelconque des revendications 1 à 6.

8. Module de tableau de bord selon la revendication 7, **caractérisé en ce que** chaque actionneur est soudés sur le circuit imprimé.

9. Module de tableau de bord selon la revendication 7 ou 8, **caractérisé en ce que** le circuit imprimé (10) présente pour chaque actionneur une lumière pour le passage de l'organe d'accouplement (7) de l'indicateur (5).

## Patentansprüche

1. Elektrisches Wirkglied einer Schalttafel, das aus einem motorisierten Gehäuse (8) gebildet wird, das zwei gegenüber liegende Seiten und eine hohle Ausgangsachse (11) aufweist, wobei das genannte motorisierte Gehäuse (8) einen Elektromotor umfasst, der einen Indikator (5) antreibt, welcher ein männliches Kopplungsorgan (7) aufweist, dessen Querschnitt komplementär zu dem inneren Querschnitt der genannten hohlen Ausgangsachse (11) des Motors ist, **dadurch gekennzeichnet, dass** die genannte hohle Ausgangsachse (11) auf die genannten zwei gegenüber liegenden Seiten des Motors mündet, ohne Protuberanzen im Verhältnis zu den genannten gegenüber liegenden Seiten derart zu formen, dass der Anschluss des Kopplungsorgans (7) des Indikators (5) auf der einen oder der anderen der genannten gegenüber liegenden Seiten des genannten motorisierten Gehäuses (8) ermöglicht wird.

2. Elektrisches Wirkglied einer Schalttafel gemäß Anspruch 1, **dadurch gekennzeichnet, dass** das genannte motorisierte Gehäuse (8) auf seinen zwei gegenüber liegenden Seiten eine Öffnung (9), die mit der Ausgangsachse (11) des Motors koaxial ist, und Öffnungen für den Durchgang der genannten elektrischen und mechanischen Anschlussmittel aufweist.

3. Elektrisches Wirkglied einer Schalttafel gemäß Anspruch 1 oder 2, **dadurch gekennzeichnet, dass** die zwei gegenüber liegenden Seiten des genannten motorisierten Gehäuses (8) deutlich eben sind.

4. Elektrisches Wirkglied einer Schalttafel gemäß Anspruch 1, **dadurch gekennzeichnet, dass** der männliche Teil des Indikators geeignet ist, die Öffnung zu einem den genannten Indikator (5) ausrüstenden Zeiger zu führen.

5. Elektrisches Wirkglied einer Schalttafel gemäß Anspruch 1, **dadurch gekennzeichnet, dass** die hohle Ausgangsachse aus einem transparenten Material realisiert ist.

6. Elektrisches Wirkglied einer Schalttafel gemäß Anspruch 1, **dadurch gekennzeichnet, dass** das männliche Organ (7) des Indikators (5) aus einem transparenten Material realisiert ist.

7. Schalttafelmodul, umfassend eine gedruckte Leiterplatte und wenigstens ein Wirkglied gemäß Anspruch 1 bis 6.

8. Schalttafelmodul gemäß Anspruch 7, **dadurch gekennzeichnet, dass** jedes Wirkglied auf die gedruckte Leiterplatte aufgeschweißt ist.

9. Schalttafelmodul gemäß Anspruch 7 oder 8, **dadurch gekennzeichnet, dass** die gedruckte Leiterplatte (10) für jedes Wirkglied eine Öffnung für den Durchgang des Kopplungsorgans (7) des Indikators (5) aufweist.

## Claims

1. An electric dashboard actuator consisting of a motor-powered housing (8) having two opposite faces and a hollow output shaft (11), said motor-powered housing (8) comprising an electric motor driving an indicator (5) having a male coupling member (7), the cross-section of which matches the inner cross-section of said hollow output shaft (11) of the motor, **characterized in that** said hollow output shaft (11) is located at and flush with said two opposite faces of the motor without forming any protrusion relative to said opposite faces so as to enable the connection of the coupling member (7) of the indicator (5) on either one of said opposite faces of said motor-powered housing (8).

2. An electric dashboard actuator according to claim 1, **characterized in that** the two opposite faces of said motor-powered housing (8) have a hole (9) coaxial with the hollow output shaft (11) of the motor and holes for the passage of said electric and mechanical connecting means.

3. An electric dashboard actuator according to claim 1 or 2, **characterized in that** the two opposite faces of said motor-powered housing (8) are substantially planar.

4. An electric dashboard actuator according to claim 1, **characterized in that** the male part of the indicator is adapted to convey light to a pointer provided on said indicator (5).

5. An electric dashboard actuator according to claim 1, **characterized in that** the hollow output shaft is made of a transparent material.

6. An electric dashboard actuator according to claim 1, **characterized in that** the male coupling member (7) of the indicator (5) is made of a transparent material.

7. A dashboard module comprising a printed circuit and at least an actuator according to any one of claims 1 to 6.

8. A dashboard module according to Claim 7, **characterized in that** each actuator is welded onto the printed circuit.

9. A dashboard module according to claim 7 or 8, **characterized in that** the printed circuit (10) is provided, for each actuator, with a hole for the passage of the coupling member (7) of the indicator (5).
